Europäisches Patentamt

European Patent Office

Office européen des brevets

(11) Veröffentlichungsnummer: **0 482 367 A1**

# EUROPÄISCHE PATENTANMELDUNG

(21) Anmeldenummer: **91116230.3**

(22) Anmeldetag: **24.09.91**

(51) Int. Cl.⁵: **B60T 8/48**, B60T 8/40

(30) Priorität: **26.10.90 DE 4034114**

(43) Veröffentlichungstag der Anmeldung:
**29.04.92 Patentblatt 92/18**

(84) Benannte Vertragsstaaten:
**DE GB SE**

(71) Anmelder: **ROBERT BOSCH GMBH**
**Postfach 30 02 20**
**W-7000 Stuttgart 30(DE)**

(72) Erfinder: **Siegel, Heinz**
**Hohenloher Strasse 86**
**W-7000 Stuttgart 40(DE)**

(54) **Hydraulische Bremsanlage, insbesondere für Kraftfahrzeuge.**

(57) Bei einer hydraulischen Bremsanlage mit Blockierschutz- und Antriebsschlupfregeleinrichtung soll das Befüllen einer ausgangsseitig einer leckstromfreien Pumpe gelegenen Leitung erleichtert werden.

Die hydraulische Bremsanlage 1 weist ein Hydroaggregat (30) und ein Pumpenaggregat (35) einer Blockierschutz- und Antriebsschlupfregeleinrichtung (48) auf. Das Pumpenaggregat (35) hat eine leckstromfreie Pumpe (36) zum Ansaugen von Druckmittel aus einem Druckmittelvorratsbehälter (3) eines Hauptbremszylinders (2) der Bremsanlage (1) und Fördern durch eine Verbindungsleitung (40) in das Hydroaggregat (30). Parallel zur Pumpe (36) ist eine Bypassleitung (42) mit einer Drossel (44) angeordnet. Nach dem Evakuieren wird vom Vorratsbehälter (3) her in die Bremsanlage (1) Druckmittel gefüllt, welches durch die Bypassleitung (42) die ausgangsseitig der Pumpe (36) gelegene Verbindungsleitung (40) füllt. Eine bisher erforderliche Befüllbohrung (31) mit Entlüftungsschraube (32) im Hydroaggregat (30) zum Befüllen dieser Verbindungsleitung (40) ist entbehrlich.

Die hydraulische Bremsanlage (1) ist besonders für Personenkraftwagen geeignet.

EP 0 482 367 A1

Stand der Technik

Die Erfindung geht aus von einer hydraulischen Bremsanlage mit einer Blockierschutz- und Antriebsschlupfregeleinrichtung, insbesondere für Kraftfahrzeuge, nach der Gattung des Patentanspruchs.

Es ist schon eine solche Bremsanlage vorgeschlagen worden (DE-Patentanmeldung P 40 29 407.2), bei der in der konstruktiven Ausgestaltung des Hydroaggregats dessen Gehäuse eine durch eine Entlüftungsschraube zu öffnende Ventilöffnung aufweist, welche mit der vom Ausgang der Pumpe kommenden Leitung in Verbindung steht. Bei der Erstbefüllung der Bremsanlage ist es erforderlich, mittels eines Schlauches Druckmittel durch die Befüllbohrung in die zum Ausgang der Pumpe führende Leitung einzuspeisen, weil trotz Evakuierens der Bremsanlage die Pumpe vom Druckmittelvorratsbehälter her nicht mit Druckmittel durchströmbar ist. Dieses Erfordernis verteuert das Hydroaggregat in der Herstellung und der Montage; es erschwert die Befüllung der Bremsanlage mit Druckmittel und bietet Anlaß zu Befüllungsfehlern.

Vorteile der Erfindung

Die erfindungsgemäße Bremsanlage mit dem kennzeichnenden Merkmal des Patentanspruchs hat demgegenüber den Vorteil, daß die Befüllbohrung mit Entlüftungsschraube entfallen kann, weil die ausgangsseitige Leitung der Pumpe durch die zweite Bypassleitung selbsttätig befüllbar ist, wenn die Bremsanlage nach der Montage in einem Fahrzeug mit Druckmittel befüllt wird. Hierdurch ergeben sich Fertigungs-, Montage-, Wartungs- und Sicherheitsvorteile. Im Bremsbetrieb tritt zwar bei eingeschalteter Pumpe ein von deren Ausgangsseite zur Eingangsseite durch die zweite Bypassleitung verlaufender Verluststrom auf; die Größe des Verluststromes ist aber durch die Drossel begrenzt, so daß die Pumpe einen ausreichend großen Förderstrom in das Hydroaggregat liefern kann.

Aus der DE-PS 37 31 636 ist zwar eine Bremsanlage bekannt, bei der in einer zwischen einem Hauptbremszylinder und einer Radbremse verlaufenden Bremsleitung eine Pumpe zum Erzeugen von Bremsdruck angeordnet ist, wobei in einer die Eingangsseite der Pumpe mit deren Ausgangsseite verbindenden Bypassleitung eine Drossel sitzt. Wenn durch Betätigung des Hauptbremszylinders normale Bremsungen durchgeführt werden, gelangt Druckmittel vom Hauptbremszylinder durch die Bremsleitung und die Bypassleitung unter Umgehung der Pumpe zur Radbremse. Eine im Zusammenhang mit der Erstbefüllung der Bremsanlage stehende Nutzung der Drossel ist nach dieser Veröffentlichung nicht bezweckt.

Zeichnung

Ein Ausführungsbeispiel der Erfindung ist anhand eines Schaltbildes einer Bremsanlage vereinfacht dargestellt und in der nachfolgenden Beschreibung näher erläutert.

Beschreibung des Ausführungsbeispiels

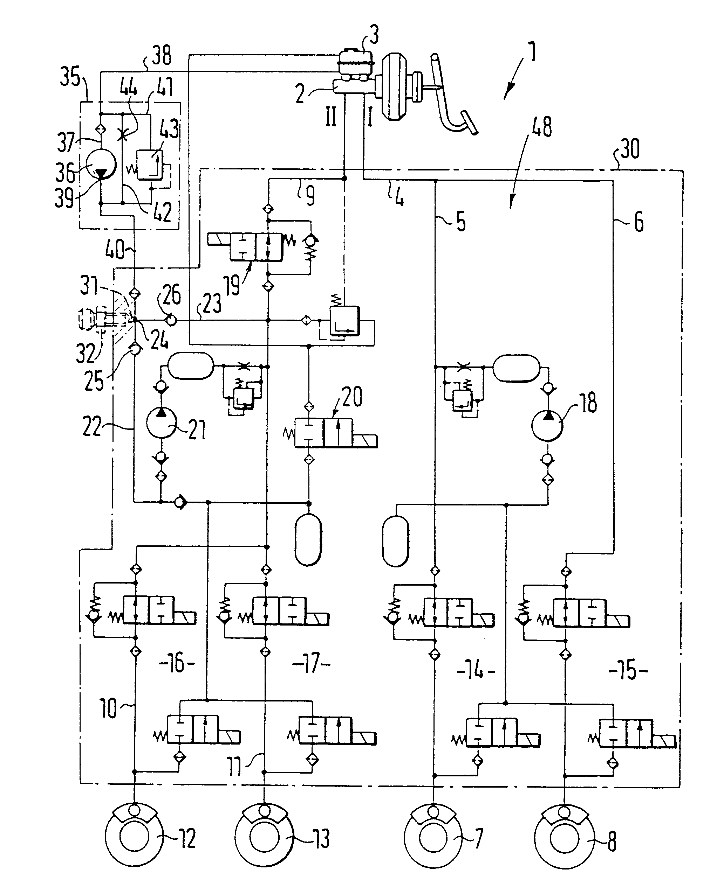

Die in der Zeichnung vereinfacht dargestellte hydraulische Bremsanlage 1 für Kraftfahrzeuge weist einen pedalbetätigbaren Hauptbremszylinder 2 mit einem Druckmittelvorratsbehälter 3 auf. Vom Hauptbremszylinder 2 geht eine Bremsleitung 4 eines Bremskreises I aus, welche in zwei Bremsleitungen 5 und 6 verzweigt ist, die zu Radbremsen 7 bzw. 8 einer nicht angetriebenen Vorderachse des Fahrzeugs führen. Ein Bremskreis II der Bremsanlage 1 weist eine mit dem Hauptbremszylinder 2 verbundene Bremsleitung 9 auf, von der zwei Bremsleitungen 10 und 11 ausgehen, an die Radbremsen 12 bzw. 13 einer angetriebenen Hinterachse des Fahrzeugs angeschlossen sind. Den Bremsleitungen 5, 6, 10 und 11 sind jeweils Ventilanordnungen 14, 15, 16 und 17 für die Bremsdruckmodulation in den Radbremsen 7, 8, 12 und 13 zugeordnet. Der Bremskreis I weist im wesentlichen noch eine Hochdruckpumpe 18 auf. Der Bremskreis II besitzt neben weiteren Ventilanordnungen 19 und 20 im wesentlichen ebenfalls eine Hochdruckpumpe 21. Diese steht eingangsseitig mit einer Ansaugleitung 22 in Verbindung. Außerdem ist eine von der Bremsleitung 9 des Bremskreises II ausgehende Überströmleitung 23 vorgesehen, welche am Anschlußpunkt 24 mit der Ansaugleitung 22 zusammentrifft. In den beiden Leitungen 22 und 23 befinden sich nahe dem Anschlußpunkt 24 angeordnete Rückschlagventile 25 und 26, welche die Leitungen in Richtung auf den Anschlußpunkt 24 sperren. Die erwähnten, zwischen dem Hauptbremszylinder 2 und den Radbremsen 7, 8, 12 und 13 angeordneten Elemente der Bremsanlage 1 sind konstruktiv in einem sogenannten Hydroaggregat 30 vereinigt, dessen Gehäuse durch die strichpunktierte Umrahmung sinnbildlich dargestellt ist. Beim eingangs beschriebenen Entwicklungsstand weist das Gehäuse des Hydroaggregats 30 am Anschlußpunkt 24 eine Befüllbohrung 31 mit Entlüftungsschraube 32 (strichpunktiert dargestellt) auf; beim erfindungsgemäßen Ausführungsbeispiel sind die Bohrung und die Schraube jedoch nicht vorhanden.

Die hydraulische Bremsanlage 1 besitzt außerdem ein strichpunktiert umrandetes Pumpenaggregat 35, welches eine leckstromfreie oder leckstromarme Niederdruckpumpe 36 aufweist. Die Pumpe 36 ist als Zahnradpumpe mit Innenverzahnung ausgebildet. Sie ist z. B. unter dem Namen "Gerotor" der Firma W.H. Nichols Company im Handel. Die Pumpe 36 ist mit ihrer Eingangsseite 37 durch eine Ansaugleitung 38 mit dem Druckmittelvorratsbehältr 3 des Hauptbremszylinders 2 verbunden. Von der Ausgangsseite 39 der Pumpe 36 geht eine zum Anschlußpunkt 24 des Hydroaggregats 30 führende Verbindungsleitung 40 aus. Zwischen der Eingangsseite 37 und der Ausgangsseite 39 der Pumpe 36 verlaufen im Pumpenaggregat 35 eine erste Bypassleitung 41 und eine parallel liegende zweite Bypassleitung 42. In der ersten Bypassleitung 41 ist ein Druckbegrenzungsventil 43 zum Absteuern von Druckmittel von der Ausgangsseite 39 zur Eingangsseite 37 der Pumpe 36 angeordnet, um deren Überlastung zu vermeiden. Die zweite Bypassleitung 42 ist dagegen mit einer Drossel 44 relativ kleinen Querschnitts versehen.

Die Elemente des Hydroaggregats 30 sowie des Pumpenaggregats 35 bilden zusammen mit einem Antriebsmotor für die Pumpen 18, 21, 36, einem elektronischen Steuergerät und Raddrehzahlsensoren (alle nicht dargestellt) eine Blockierschutz- und Antriebsschlupfregeleinrichtung 48, deren Funktion in der hydraulischen Bremsanlage 1 bekannt ist. Es sei lediglich angemerkt, daß im Bremskreis I Blockierschutzregelbetrieb, im Bremskreis II Blockierschutz- und Antriebsschlupfregelbetrieb möglich sind. Dabei dient die Niederdruckpumpe 36 dazu, im Antriebsschlupfregelbetrieb Druckmittel durch die Ansaugleitung 38 aus dem Druckmittelvorratbehälter 3 anzusaugen und durch die Verbindungsleitung 40 einerseits bei Regelbeginn durch die Überströmleitung 23 in die Bremsleitung 9 und andererseits durch die Ansaugleitung 22 zur Hochdruckpumpe 21 zu fördern. Bei der Förderung der Pumpe 36 strömt ein geringer Teil des Druckmittel-Förderstroms von der Ausgangsseite 39 durch die zweite Bypassleitung 42 und die Drossel 44 zur Eingangsseite 37 der Pumpe.

Bei der Montage der Bremsanlage 1 in einem Fahrzeug werden das Hydroaggregat 30 und das Pumpenaggregat 35 in Übereinstimmung mit dem Schaltbild mit dem Hauptbremszylinder 2 und den Radbremsen 7, 8, 12 und 13 durch die entsprechenden Leitungen verbunden. Dabei ist das Hydroaggregat 30 teilweise mit Druckmittel gefüllt, insbesondere auch die Ansaugleitung 22 zwischen der Pumpe 21 und dem Rückschlagventil 25. Zum vollständigen Befüllen der Bremsanlage 1 mit Druckmittel wird am Druckmittelvorratsbehälter 3 ein Evakuier- und Füllgerät angeschlossen, mit dem in der Bremsanlage enthaltene Luft zuerst entfernt und dann durch Druckmittel ersetzt wird. Dabei strömt auch Druckmittel durch die Ansaugleitung 38 und die zweite Bypassleitung 42 mit der Drossel 44 in die Verbindungsleitung 40 zwischen der Ausgangsseite 39 der im nicht angetriebenen Zustand für Druckmittel undurchlässigen Pumpe 36 und dem Anschlußpunkt 24 des Hydroaggregats 30. Die Leitungsverbindung zwischen der Ausgangsseite der Pumpe 36 und der Pumpe 21 im Bremskreis II ist nun vollständig mit Druckmittel aufgefüllt.

**Patentansprüche**

1.  Hydraulische Bremsanlage (1) mit einer Blockierschutz- und Antriebsschlupfregeleinrichtung (48), insbesondere für Kraftfahrzeuge,
    - mit einem einen Druckmittelvorratsbehälter (3) aufweisenden Hauptbremszylinder (2), von dem zu Radbremsen (z. B. 12, 13) führende Leitungen (9, 10, 11) ausgehen,
    - mit einem im Verlauf der Leitungen angeordneten Hydroggregat (30) der Blockierschutz- und Antriebsschlupfregeleinrichtung (48),
    - mit einer leckstromfreien oder leckstromarmen Pumpe (36), welche eingangsseitig wenigstens mittelbar mit dem Druckmittelvorratsbehälter (3) und ausgangsseitig durch eine Leitung (40) mit dem Hydroaggregat (30) verbunden sowie durch eine zwischen ihrer Eingangsseite (37) und ihrer Ausgangsseite (39) verlaufende Bypassleitung (41) mit einem Druckbegrenzungsventil (43) überbrückt ist, dadurch gekennzeichnet,
    daß eine die Eingangsseite (37) der Pumpe (36) mit deren Ausgangsseite (39) verbindende zweite Bypassleitung (42) mit einer Drossel vorgesehen ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | DE-C-3 900 850   (DAIMLER-BENZ) <br> * Spalte 3, Zeile 60 - Spalte 9, Zeile 26 * <br> * Spalte 18, Zeile 13 - Zeile 28; Abbildung 1 * * <br> – – – | 1 | B 60 T 8/48 <br> B 60 T 8/40 |
| Y,D | DE-C-3 731 636   (ROBERT BOSCH) <br> * Zusammenfassung * <br> * Spalte 4, Zeile 18 - Zeile 25; Abbildung * * <br> – – – | 1 | |
| A | DE-C-3 900 852   (DAIMLER-BENZ) <br> * Spalte 18, Zeile 68 - Spalte 19, Zeile 15 * <br> * Spalte 26, Zeile 34 - Zeile 39; Abbildung 2 * * <br> – – – – – | 1 | |

RECHERCHIERTE
SACHGEBIETE (Int. Cl.5)

B 60 T

Der vorliegende Recherchenbericht wurde für alle Patentansprüche erstellt

| Recherchenort | Abschlußdatum der Recherche | Prüfer |
|---|---|---|
| Den Haag | 27 Januar 92 | MEIJS P.C.J. |